# EUROPEAN PATENT SPECIFICATION

(11) **EP 3 940 543 B1**
(45) Date of publication and mention of the grant of the patent: **12.03.2025**
(21) Application number: 21177328.8
(22) Date of filing: 02.06.2021
(51) Int. Cl.: G06F 13/10, G06F 13/40, G06F 3/023

(54) **SYSTEM AND METHOD OF POLYCHROMATIC INDICATION FOR A KVM SWITCH**
SYSTEM UND VERFAHREN ZUR POLYCHROMATISCHEN ANZEIGE FÜR EINEN KVM-SCHALTER
SYSTÈME ET PROCÉDÉ D'INDICATION POLYCHROMATIQUE POUR UN COMMUTATEUR CLAVIER-VIDÉO-SOURIS

(30) Priority: 13.07.2020 US 202016926795
(43) Date of publication of application: 19.01.2022
(73) Proprietor: High Sec Labs Ltd., 3079510 Caesarea (IL)
(72) Inventor: SOFFER, Aviv, 30889 Caesarea (IL)
(74) Representative: Beck & Rössig European Patent Attorneys

(56) References cited:
- US-A1- 2007 152 972
- US-A1- 2013 282 932
- US-A1- 2016 203 343
- US-B2- 9 336 161

## Description

### FIELD OF THE INVENTION

The present invention generally relates to keyboard, video, mouse (KVM) switching systems. More particularly, the present invention relates to systems and methods for indication of a selected/active host by a KVM switch.

### BACKGROUND OF THE INVENTION

A KVM switch is a device that typically enables a single user to operate multiple computers (hosts) from a single set of peripheral devices. In some cases, where some of the hosts are more data sensitive than others, it may be recommended to prevent data leakage between host computers connected to KVM switches and between one or more networks connected to the host computers. KVM switches that can maintain separation and/or isolation of data between host computers and/or data flowing through various elements of the KVM switch are usually called secured KVM switches. A KVM switching system according to the preamble portion of claim 1, a keyboard according to the preamble portion of claim 8 and a KVM switch according to the preamble of claim 16 are known from US 9,336,161 B2 and US 2016/0203343A1.

One of the weakest links regarding security in KVM switches, in general, and in secure KVM switches, particularly, may be the user awareness of the host that the user is working on. It is important that the user is aware of the type of host the user is working on (e.g., which host is active), to, for example, avoid mistakenly working on an erroneous wrong host. For example, a KVM switch can be connected to three host computer, host A, host B, and host C. The user of the KVM switch may operate the computer as if it is working on host A, when in reality the KVM switch is connected such that host B is active. In this manner, errors can occur. Accordingly, the present invention aims at improving cyber security when using KVM switches.

### SUMMARY OF THE INVENTION

This technical problem is solved by a KVM switching system according to claim 1, a keyboard according to claim 8, a method according to claim 14, and KVM switch according to claim 16. **BRIEF**

### DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced. In the drawings:
FIG. 1 is a schematic illustration of a typical configuration of a KVM switching system, in accordance with some embodiments of the present invention;
FIG. 2 is an illustration of a standard QWERTY keyboard used, in accordance with some embodiments of the present invention;
FIG. 3 is a schematic block diagram that shows a portion of a KVM switch, which is not part of the invention;
FIG. 4 is a schematic block diagram of a remote control of the KVM switch, which is not part of the invention;
FIGs. 5A-5C are illustrations of several variants of keyboards that support a KVM switch, in accordance with some embodiments of the invention;
FIG. 6 is a schematic block diagram of a general peripheral device coupled to a KVM switch and supporting polychromatic indication in accordance with some embodiments of the present invention;
FIG. 7 is a flow chart of the KVM switch controller according to some embodiments of the present invention;
FIG. 8 is an illustration view of a set of multimedia peripheral devices in accordance with some embodiments of the present invention;
FIG. 9 is an illustration view of an external disk device supporting polychromatic indication in accordance with some embodiments of the present invention;
FIG. 10 is an illustration view of a multi-domain smart-card reader coupled to a plurality of hosts and supporting polychromatic indication in accordance with some embodiments of the present invention;
FIG. 11 is an illustration of another variant of keyboard that support a KVM switch, in accordance with some embodiments of the invention; and
FIG. 12 is a block diagram of the keyboard in FIG. 11 with support of interface separation between the standard keyboard functionality and the KVM switch support functionality in accordance with some embodiments of the present invention

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF EMBODIMENTS OF THE INVENTION

In the following detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items. Unless explicitly stated, the method embodiments described herein are not constrained to a particular order or sequence. Additionally, some of the described method embodiments or elements thereof may occur or be performed simultaneously, at the same point in time, or concurrently.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention, in some embodiments thereof, relates to Keyboard, Video and Mouse (KVM) switching systems and, more particularly, but not exclusively, to indication of the selected/active host by a KVM switch. In some embodiments, a KVM switch is a device that enables a single user to operate multiple computers (e.g., hosts) from a single set of peripheral devices. In some embodiments, where at least some of the hosts are more data sensitive than others, it can be important to prevent data leakage between the host computers connected (e.g., directly connected via wired connections) to the KVM switch and between the networks coupled to the respective hosts. KVM switches that maintain data separation (e.g., data isolation) can be referred to as a secured KVM switch. One difficulty regarding security in KVM switches, in general, and in secure KVM switches, in specific, is the user's awareness of the particular host of a plurality of hosts the user is currently working with. It may be important that the user is aware of the active/selected host he works with. In some embodiments, the current invention addresses this issue.

In various embodiments, the KVM switch, the host computers, the peripheral devices and/or any components/devices of the system are connected electrically, mechanically or both. In various embodiments, the KVM switch, the host computers, the peripheral devices and/or any components/devices of the system are connected directly without any intermediary components or devices. In various embodiments, the KVM switch, the host computers, the peripheral devices and/or any components/devices of the system are connected via cables, connectors, wires, PCB traces, pins, switches and/or any other low ohmic resistance element that is used to establish galvanic connection between the components and/or devices.

In various embodiments, the KVM switch, the host computers, the peripheral devices and/or any components/devices of the system are connected through one or more passive or active intermediary components or devices.

In various embodiments, the KVM switch, the host computers, the peripheral devices and/or any components/devices of the system are arranged to cooperate with one another to provide a one or more desired functions.

According to some embodiments, a keyboard-video-mouse (KVM) switching system is provided to identify a selected or active host by a KVM switch. In some embodiments, the user switches between hosts by pressing keys that are located either on the KVM switch enclosure itself or, in the case where the KVM switch is not located close enough to the user, in a remote control of the KVM switch located near the user. The remote control can be referred to as Auxiliary Front Panel (AFP). Once the user switches to a particular host, that host can become an active host.

A host computer, on which the user desires to be the active host, may be selected by pressing on a key on the KVM switch or the KVM switch remote control. In a two hosts KVM switch system (e.g., a system that allows the user to be working on two computers with the same peripheral devices), two keys may be used by the user (e.g., two keys on the KVM switch or two keys on the KVM switch remote control) in order to switch between the two computers. Similarly, in a four hosts KVM switch system, four keys may be used by the user to switch between the four computers. In some embodiments, illumination indicators are associated with the keys, to, for example, drive the user's awareness to an active host. The indictors may be located in, on, in proximity to, or adjacent to one or more keys (e.g., the host selection keys). For example, assume there are three hosts and three keys on the KVM switch (or KVM switch with remote control), and host #3 is the active host, the illuminated indicator illuminates the corresponding push button key #3 or the corresponding indicator #3 is illuminated. In some embodiments, a remote control of the KVM switch having the indicators may be configured to be located on top of a computer display frame to, for example, provide an improved line of sight view between a user's eyes and an indication of the active host.

In some embodiments, the KVM switch enclosure or the remote-control enclosure may include one or two digits display that displays the host number, e.g., the digit '3' continuing with the above example, as the indicator. To ease the switching between hosts, some KVM switch may support selection of the active host using key-press combinations, also known as keys shortcuts, over the keyboard. For example, pressing 'Ctrl' + 'Alt' + '1' keys on the keyboard may switch an active host to host #1, and pressing 'Ctrl' + 'Alt' + '2' may switch active host to host #2.

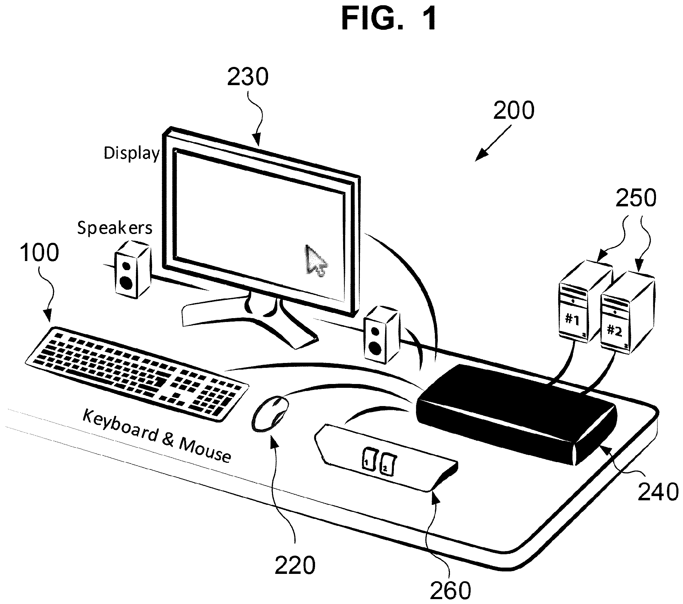

For purposes of better understanding some embodiments of the present invention, as illustrated in Figures 1-7 of the drawings, reference is first made to FIG. 1.

FIG. 1 schematically illustrates a typical system configuration with a KVM switch. A system 200 includes a keyboard 100, a mouse 220, a display 230 (also known as a computer monitor), a KVM switch 240, a plurality of computer hosts 250, and in some embodiments a KVM remote control 260.

According to some embodiments, the system may further include speakers, headphone, microphone, printers and/or other peripheral devices such as external storage, card reader, such as smart card reader for authentication, etc. (not shown in FIG. 1). Hosts 250 of system 200 may be coupled to local area networks (LANs) or any other communication networks. The network coupled to each host may be of a different security level. For example, one network is an unclassified network that is connected to the Internet, while the other network is a classified network and is only internal in an organization or a campus.

The hosts 250 may be electrically and/or mechanically coupled to the LANs and/or any other communication networks. The hosts 250 may be directly connected or coupled to one or more of the LANs and/or one or more of any other communication networks without any other devices in between. In various embodiments, the connections are through cables, electrical connectors, wires, PCB traces, pins, switches, and/or any other low ohmic resistance element that is used to establish galvanic connection between elements.

According to some embodiments, the KVM switch 240 is configured to couple to keyboard 100 and/or mouse 220 and/or display 230, and allows the user to control multiple computers (or hosts) 250 from a single set of peripherals, such as, keyboard 100, video monitors 230, and mice 220. In some embodiments, the KVM switch 240 allows switching two or more video monitors 230 and/or three or more user interface devices (e.g., in USB standard as Human Interface Devices (HID)) as well as audio peripherals, such as, speaker and microphone, other USB devices, such as, ID card readers, and/or other devices as are known in the art to couple to and be switched by a KVM switch.

In order to switch between hosts 250, the user may press a dedicated push button located on the enclosure of KVM switch 240. Upon receiving and/or processing of the host switching command, the corresponding indicator in KVM switch 240 may be illuminated. The number of computers or hosts 250 that can be coupled to the KVM switch may be two, as illustrated in FIG. 1. In some embodiments the hosts themselves may reside in remote locations, such as, in data centers.

In some embodiments, KVM switch 240 may be located out of reach of the user. For example, the KVM switch 240 may be few meters away from the user's desk in the other side of the room or up-to many kilometers away in different premises. In such cases, a distance extender device, coupled between the user peripherals 100, 220, 230 and the KVM switch 240, may be used. The distance extender's media may include a USB cable, a category 5 cable that can carry Ethernet family protocols, an optical fiber or the like.

In some embodiments, a remote control can be used to switch between hosts. For example, when the user cannot reach, or cannot easily reach, the KVM switch 240 push button keys on the KVM switch enclosure, a remote control 260 may be used. To switch between hosts 250, the user may press a push button located on the enclosure of remote control 260. Upon receiving a switching command by remote control 260, remote control 260 sends the switching request command to KVM switch 240. After processing this command by KVM switch 240, KVM switch 240 may send back a switching acknowledge to KVM remote control 260 and then KVM remote control 260 illuminates the proper indicator.

In some embodiments, securing the KVM system from cyber-attacks is desired. The secure KVM may have several levels of security. One level includes a "whitelist" or authorized peripheral devices that are allowed to be coupled to KVM switch 240. Another level is to enforce only unidirectional communication to further isolate between the hosts so that no data (or substantially no data) can be leaked between the hosts. In some embodiments, data from the HID device may only flow to the host and for the video stream, data may only flow from the host to the display. In some embodiments, EDID reading or USB device enumerations may be used for bi-directional communication that is needed in the initialization setup. This bi-directional communication may be made secured by allowing it only in KVM power-up and using a host emulator and/or peripheral device emulators in order to communicate this data between the peripheral devices and the host whenever it is needed.

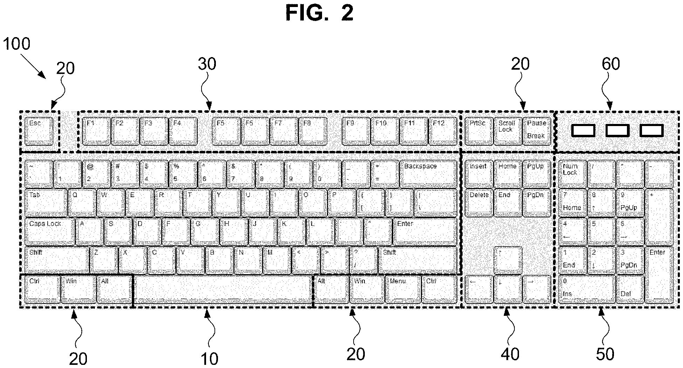

Reference is made now to FIG. 2. FIG. 2 illustrates a standard QWERTY keyboard 100 including alphanumeric keys 10, control keys 20, function keys 30, navigation keys 40, and numeric keypad 50. The keyboard 100 may also include three illuminated indicators 60 to indicate locked states that can be activated by the three lock keys: Caps Lock, Num Lock and Scroll Lock. The Caps Lock key is used for entering capital letters, the Num Lock key is used to switch between digits and the navigation keys in the numeric keypad, and Scroll Lock key originally used together with the arrow keys to either scroll the contents of a text window or to moving the cursor on the text window.

In some embodiments, the "KVM switch" includes a device that switches, e.g., couples, between a plurality of host computers and at least one set of peripheral devices. In various embodiments, the set of peripheral devices may include a single peripheral device (e.g., a mouse) or a plurality of peripheral devices provided as a set (e.g., a keyboard and a mouse). The set of peripheral devices may include of at least one of a keyboard (K) and a mouse (M). In various embodiments, the mouse is a track ball, touch pad or the like. In some embodiments, the set of peripheral devices may further include a video display (V). The video display, also referred as the computer monitor, may be any device presenting visual information to the user, including, but not limited to, cathode-ray tube CRT display, Plasma Display, Liquid Crystal Display (LCD), Light-Emitting Diode (LED) display and the like. The computer monitor may come in apparatus form-factor of computer monitor, TV set, head-mounted display, video projector and the like.

In some embodiments, the set of peripheral devices includes a plurality, e.g., two or four, computer monitors. The set of peripheral devices may further include at least one of, or any combination of, audio devices such as speaker or headset to enable hearing voices or sounds transmitted from the host computer, a microphone to enable transmission of voice from the user to the host computer, an IP telephone handset to perform telephone calls through the host computer network, a video camera to perform video tele-conferencing, a user authentication device, such as, fingerprint reader, biometric reader, token generator reader, Common Access Card (CAC) reader, Personal Identity Verification (PIV) card reader, smartcard reader and the like. The set of peripheral devices may further include other personal use peripheral devices such as personal printers, personal scanners, personal USB devices and the like.

In some embodiments, peripheral devices switch is the switch positioned between the one or more peripheral devices and the plurality of hosts, for instance as an alternative to the KVM switch. In some embodiments, the peripheral devices switch switches between peripheral devices such as Keyboard, Video monitor and Mouse peripheral devices as well as all other devices mentioned above, such as microphone, smartcard readers and the like. In some embodiments, the peripheral devices switch includes a KVM switch as well as a KM (Keyboard and Mouse only) switch, a KVM (video) combiner, a USB devices switch, an audio devices switch, or any similar device that switches. In some embodiments, the peripheral devices switch is coupled to a set of one or more peripherals and a plurality of hosts. In some embodiments, the peripheral devices switch is coupled between a set of one or more peripherals and a plurality of hosts. In some embodiments, the peripheral devices switch includes both a KVM switch and a KVM matrix, or peripheral devices matrix, which means a device that may switch, coupled between multiple sets of peripheral devices and multiple host computers in a way that a plurality of users may work simultaneously with a plurality of host computers wherein no two users are simultaneously operating with the same host computer.

According to some embodiments, additional feedback is provided by the system to indicate the active host, e.g.,, the current host the user is working with, and the current host the KVM switch is coupled to the set of the peripheral devices operated by the user. In some embodiments, in order to provide additional feedback each of the different hosts coupled to the KVM switch is coded with a distinct color, and providing this color indication, by light illumination by indicators in at least one of or the combination of (a) the KVM switch enclosure and/or the KVM remote control enclosure; and (b) at least one of or any combination of the peripheral devices in the peripheral device set, operated by the user.

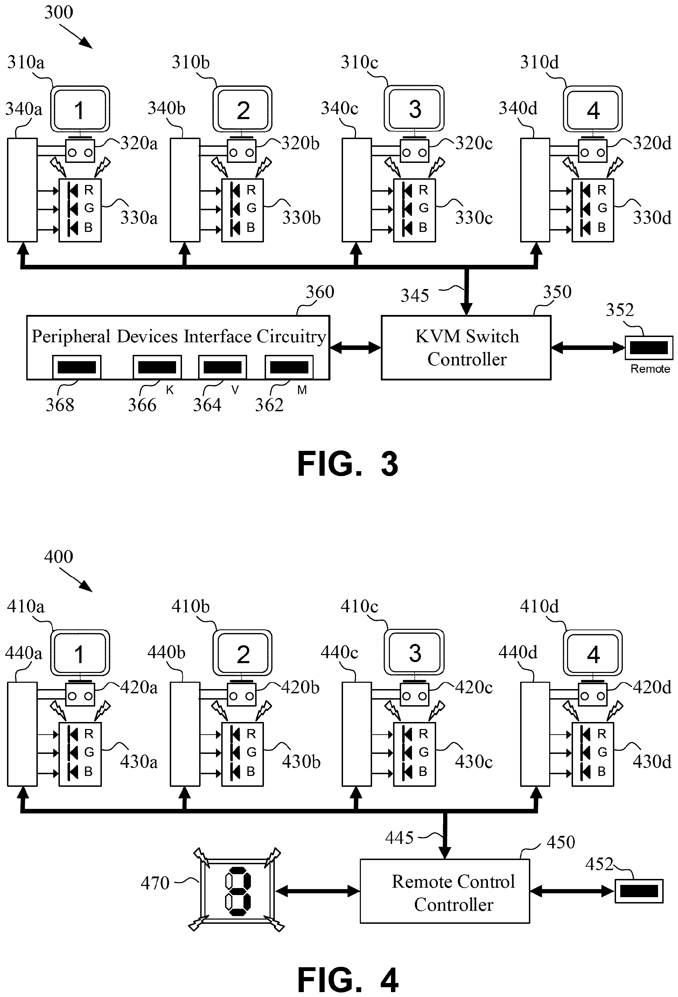

Reference is made now to FIG. 3. FIG. 3 is a schematic block diagram that shows a portion of a KVM switch 300. The KVM switch 300 includes keys 310a, 310b, 310c and 310d (e.g., push-buttons) that select the active host when pressed (e.g., key 310b corresponds to host #2). These keys may be located in the front panel of KVM switch 300 enclosure. Each key is mechanically coupled to a switch 320a, 320b, 320c and 320d. Switches 320a, 320b, 320c and 320d are coupled respectively to key interfaces 340a, 340b, 340c and 340d. Key interfaces 340a, 340b, 340c and 340d are coupled to a KVM switch controller 350 through connection 345. When a key 310a, 310b, 310c or 310d is pressed, KVM switch controller 350 may receive this event and change the active host accordingly. For the sake of clarity, all KVM switch 400 circuitries of the switch itself and all the circuitries between the set of peripheral devices interface and the host computer interface are not shown in FIG. 3.

Each one of the key interfaces 340a, 340b, 340c and 340d is coupled to a polychromatic light source 330a, 330b, 330c and 330d respectively. The polychromatic light source may include one or more RGB LEDs that include illumination from Red LED, Green LED and Blue LED. Additionally, the polychromatic light source may include two or more monochromatic light sources. Upon changing the active host computer, KVM switch controller 350 may control, using key interfaces 340a, 340b, 340c and 340d, the polychromatic light sources 330a, 330b, 330c and 330d.

Herein and hereinafter, the suffix 'x' in 330x or 340x or any other reference signs may mean each, any or all similar elements, hence 340x, in this case, means any of 340a, 340b, 340c and 340d.

The key corresponding to the active host computer may be illuminated with the color assigned (or associated) to this host computer, while all other keys illumination is turned off. Additionally or alternatively, KVM switch controller 350 may send a command to a remote control via interface 352 to set an indication of the current active host in the remote control. The KVM switch controller 350 is configured to send a command to set a polychromatic indication of the active host to any one of or any combination of the set of peripheral devices via peripheral devices interface circuitry 360. Peripheral devices interface circuitry 360 includes an interface to keyboard 366, in some embodiments, one or more interfaces to a video display 364, interface to a mouse or a pointing device 362, and in some embodiments one or more interfaces to additional peripheral devices such as CAC card reader, microphone, etc.

In some embodiments of the invention, the selection of the active host computer may be initiated by external trigger and not by pressing keys 310a, 310b, 310c and 310d of KVM switch 300. For example, as presented in detail hereinafter, the command for selecting different host computer may be initiated by the remote control or one of the devices in the set of peripheral devices. In such case, KVM switch controller 350 may update its own indications by proper illuminating commands to any indication in polychromatic light source 330a, 330b, 330c and 330d and by sending the proper commands, if necessary, to the remote control and the peripheral devices.

Reference is now made to FIG. 4. FIG. 4 is schematic block diagram of a remote control 400 of KVM switch 300 . The host selection keys and the active host indication may have similar elements to the one presented in KVM switch 300 (shown in Fig. 3).

The KVM block diagram of a switch remote control 400 includes four keys 410a, 410b, 410c and 410d; four switches 420a, 420b, 420c and 420d; four polychromatic light source 430a, 430b, 430c and 430d; and four key interfaces 440a, 440b, 440c and 440d. The key interfaces 440a, 440b, 440c and 440d are coupled to a remote-control controller 450 via connection 445.

The number of supported hosts by the KVM switch may be in the range of 2-8. In some embodiments, the number of supported hosts may be any other natural number, n, and the numbers of keys 410x as well as elements 420x, 430x, 440x may be respectively 'n' too.

Suppose the present active host is host #2, then remote-control controller 450 may command the polychromatic light source 430b to illuminate with the color associated with host computer #2. Polychromatic light sources 430a, 430c and 430d may be controlled by remote-control controller 450 to off-state, e.g., no illumination. When the user presses key 430c, remote-control controller 450 receives this event and sends this event via interface 452 to KVM switch 300. Interface 452 is coupled by a cable to interface 352. Additionally or alternatively, the KVM remote control and KVM switch may be coupled via wireless connection.

The request to switch from host #2 to host number #3 may be processed in KVM switch 300 and as a result it produce back to remote control 400 command to turn-off the indication of host #2 and command to turn-on the indication of host #3 by illuminating key 410c (by polychromatic light sources 430c) with the color associated with host #3.

Additionally or alternatively, remote control 400 includes an active host indicator 470. Active host indicator 470 may include a digit display and background display. The background display may be illuminated with the color assigned to the active host and the digit display displays the digit corresponding to the channel number so with regards to the above example, before the host switch the digit display was displaying the digit '2', and after the host switch, the digit display displays the digit '3'. The color of the digit is either black (e.g., illumination off) or illuminated with a color that creates a good contrast to the color assigned to the active host (e.g., to attract the awareness of the user).

The background display and digit display may be a 2D pixel array display wherein the digit and the background are created by manipulating the pixels of the image displayed by the 2D pixel matrix. Additionally or alternatively, digit display may be a seven-segment display and background display is a flat surface illuminates by one or more polychromatic light sources. Active host indicator 470 may be controlled by remote-control controller 450 in according to the command received from KVM switch 300.

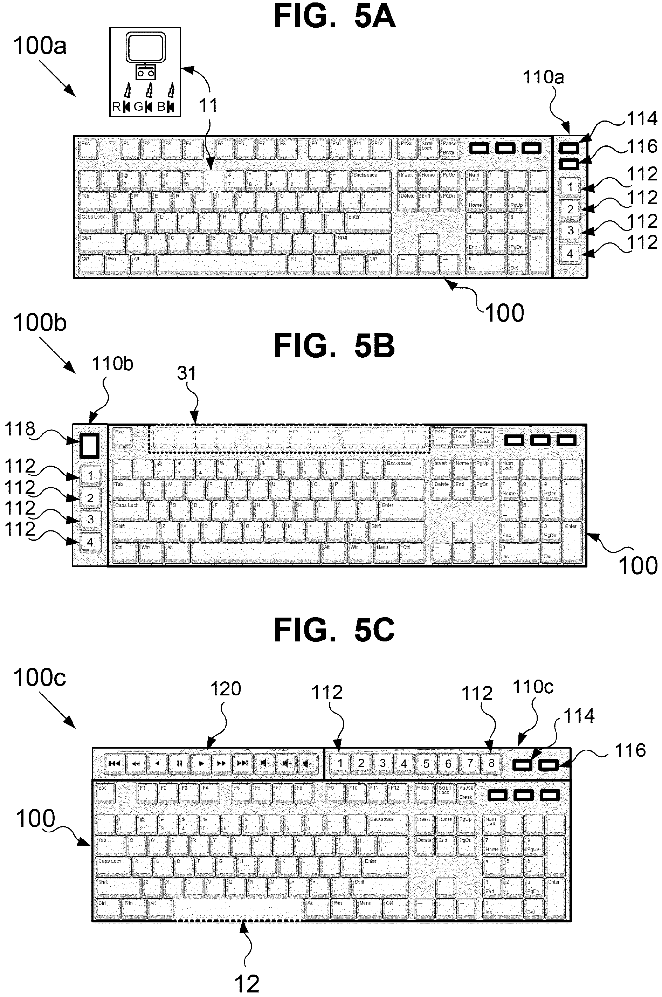

Reference is made now to FIGs. 5A-5C. FIGs. 5A-5C illustrate several variants of keyboards that support a KVM-switch. FIG. 5A illustrates a keyboard 100a including standard keyboard arrangement 100 and additional keyboard section 110a to support a KVM switch. Keyboard section 110a, in some embodiments of the invention, includes four keys 112 that to select active host similar to keys 310x of keyboard switch or KVM switch 300 and keys 410x of remote control 400. The four keys 112 may be labeled by the digits '1' - '4'. In addition, keyboard section 110a may include two indicators 114 and 116, e.g., LED light sources, that are used to reflect statuses from the KVM switch. The statuses may be the state of the KVM switch such as power on, initial setup in process, error indication, etc. In some embodiments of the invention, the position of keyboard section 110a is in the right side of keyboard 100.

In some embodiments of the invention, each one of keys 11 of keyboard 100a is a polychromatic illuminated key. For the sake of clarity in the figure, only the digit '6' key is illustrated as illuminated key. The internal structure of each illuminated key is illustrated in the figure inside a box above the keyboard near key 11.

Each key may include a plastic cap, coupled to a key switch, and besides or below the key switch, there is polychromatic light source. In some embodiments, the polychromatic light source may include three LEDs, each with a different color: R-RED LED, G-Green LED and B-Blue LED. This LEDs constellation also known as RGB LED. Standard 8 bit per color RGB control may provide over 16 million possible colors. Additionally or alternatively, other polychromatic light source, such as, a white light sources coupled to RGB filters or the like may be used.

KVM control keys 112 may be illuminated by polychromatic light sources as well. When a key 112 is pressed, the press event may be sent by the standard keyboard interface or alternatively by a dedicated interface between keyboard section 110a and the KVM switch to the KVM switch. When an acknowledge is received (the KVM can be switched to the host associated with this key and this host can become the active host), the key 112 illuminates in a preset color that is associated with the current active host.

In some embodiments, in order to provide the full attention of the user to the fact that it currently coupled to this specific host, all other keys of keyboard 100a are illuminated with the same color. In some embodiments, only some of the keys may be illuminated with this preset color. For example, only the alphanumeric keys 10 are illuminated or only control keys 20 or function keys 30 are illuminated.

FIG. 5B illustrates a KVM supporting keyboard 100b including an example of a standard keyboard arrangement 100 and an additional keyboard section 110b to support a KVM switch. Keyboard section 110b, in some embodiments of the invention, may include four keys 112 (keys with the same function as in keyboard section 110a) that select an active host. Keys 112 may be labeled by the digits '1' - '4'. In addition, keyboard section 110b may include a display 118 to indicate the KVM switch status. The statuses may be the state of the KVM switch such as power on, initial setup in process, error indication etc. Display 118 may indicate the number of the host that is currently active. Display 118 may be a seven-segment display. Display 118 may have a polychromatic background display that function in similar way as active host indicator 470 of remote control 400 that has been described hereinabove. In some embodiments of the invention, the position of keyboard section 110b may be in the right side of keyboard 100.

Keyboard 100b may include illuminated function keys 31. Illuminated function keys are similar to function keys 30 but includes polychromatic light source under these keys. Due to the location of function keys 31 illumination of this keys capture the attention of the users.

As in keyboard 100a, KVM control keys 112 may be illuminated by the polychromatic light source as well. Upon selection of the active host in the KVM switch, keys 31 and the appropriate key 112 are illuminated with the color associated with the active host computer. In some embodiments, display 118 displays in the same color. All other keys of keyboard 110b may be either illuminated or not illuminated. In some embodiments of the invention, all other keys of keyboard 110b are illuminated with a natural color, such as, white, yellow or blue to support well known in the art illumination for keyboard operation in dark condition. In some embodiments, these keys may be illuminated for a use in specific application. For example, some application may illuminate one or more letter keys to indicate their specific use in the application.

FIG. 5C illustrates yet another KVM supporting keyboard 100c including standard keyboard arrangement 100 and additional keyboard section 110c to support a KVM switch. In some embodiments of the invention, the position of keyboard section 110c is in the top side of keyboard 100. In addition to the keyboard section 110c, keyboard 100c in the same top row may include multimedia extension keyboard section 120. The keyboard section 120 may include keys such as pause, paly, fast forward, volume keys and a like. Alternatively, other keyboard extensions section or keys, e.g., such as gaming keyboard extension, may be integrated to keyboard 100c (or 100a, 100b). Keyboard section 110c in some embodiments of the invention, includes eight keys 112. Keys 112 are configured to select one active host out of 8 possible hosts coupled to the KVM switch. Keys 112 here, may function similar to keys 112 in sections keyboards 110a, 100b and keys 310x and 410x in the KVM switch and the remote control respectively. Keys 112 of keyboard section 110c may be labeled by the digits '1' - '8'. In addition, two indicators 114 and 116, similar to the ones in keyboard 100a, may be used to reflect statuses from the KVM switch.

Keyboard 100c includes an illuminated space key 12. Illuminated space key 12 includes polychromatic light source under the key. Due to the location of space key 12, illumination of the space key may capture the attention of the user. As in keyboard 100a, KVM switch control keys 112 may be illuminated by the polychromatic light source as well. Upon selection of the active host in the KVM switch, key 12 and the appropriate key 112 in keyboard section 110c may be illuminated with the color associated with the active host computer. All other keys of keyboard 110c may be either illuminated or non-illuminated keys.

In some embodiments of the invention, those keys may be illuminated with a natural color, such as, white, yellow or blue to support well known in the art illumination for keyboard operation in dark condition. In some embodiments, those keys may be illuminated for a use in specific application.

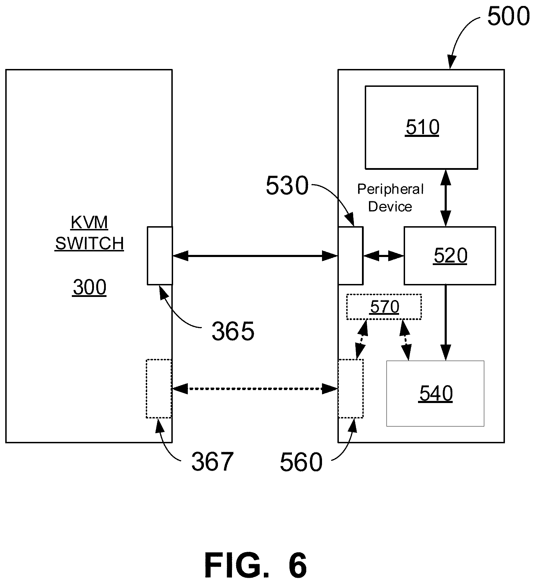

Reference is made now to FIG. 6. FIG. 6 is a schematic block diagram of a general peripheral device coupled to a KVM switch and supporting polychromatic indication in accordance with some embodiments of the present invention. A peripheral device 500 is coupled to a KVM switch 300 through interface 365 of KVM Switch 300 and interface 530 of peripheral device 500. Peripheral device may be any peripheral device including mouse, keyboard, microphone or any other peripheral devices mentioned hereinabove. The specific circuitry of each peripheral device is indicated by circuitry 510.

Circuitry 510 is controlled by controller 520. Controller 520 is coupled to interface 530 to receive command and communication from the active host through KVM switch 300, and to send peripheral device data to the active host through KVM switch 300. Peripheral device 500 further includes polychromatic indication 540 to illuminate in the color associated with the active host.

Additionally or alternatively, peripheral device 500 may be coupled using interface 560 to interface 367 of KVM switch 300. This connection may be used as a secondary communication channel dedicated to the polychromatic indication functionality. In some embodiments, the controller 570 may be used to control polychromatic indication 540 and to communicate with KVM switch 300 in this case.

In some embodiments of the invention, peripheral device 500 is a mouse and polychromatic indication 540 illuminates the mouse and/or the surface area around the mouse.

In some embodiments of the invention, peripheral device 500 is a microphone and the polychromatic indication 540 illuminates the microphone head whenever the microphone audio is open to the active host with the appropriate color (e.g., the indication is only active when the microphone is open for transmitting audio signals, for example, conditioned upon a push to talk button).

In some embodiments of the invention, peripheral device 500 is keyboard 100 and the polychromatic indication 540 illuminates one or more keys of keyboard 100 with the appropriate color.

In some embodiments of the invention, peripheral device 500 is smartcard reader and the polychromatic indication 540 illuminates the doorway into which the smartcard is inserted with the appropriate color.

In some embodiments, the KVM switch 300 may support some peripheral devices to be coupled to different host then the main KVM switch. For example, if an application in one host computer, e.g., host #1, needs the smartcard reader coupled to host #1 for the full process while the user wants during this time to switch and work with host #2, some KVM switch can allow this kind of operation. If host # 1 is assigned to the red color and host #2 to the blue color. According some embodiments, the KVM switch may control the peripheral devices to illuminate in red, while the smartcard reader is controlled to illuminate in blue.

In some embodiments, the control command to illuminate in polychromatic light source by the KVM switch 300 is performed by transfer of a data sequence including 24-bit color data (8-bit R, 8-bit G and 8-bit G) each time an active channel is changed. Additionally or alternatively, KVM switch 300 may send the color assignment for the hosts from time to time (for example after reset and when color assignment is changed) and each device that has color illumination capability may set the appropriate color based on the stored color table data stored in the device's memory. The setup of colors assignment to the KVM switch may be performed in several ways.

First, a default setup may be stored in the KVM switch during manufacturing. After deployment the setup may be changed using setup session open with one of the host or setup session perform by a system administrator using an external laptop coupled to special setup interface in KVM switch 300. Yet setup may be done using the key shortcuts with the keyboard. For example, the key sequence 'Ctrl' + 'Shift' + '1' followed by six hexadecimal digit key sequence may be used to associate host #1 with the color determined by 8 bit (two hexadecimal digits) for the red component, 8 bit for the green component and 8 bit for the blue component. For example, typing Ctrl + Shift + 2, "800080" may assign a purple color, RGB (128, 0, 128), to host #2 of the KVM switch.

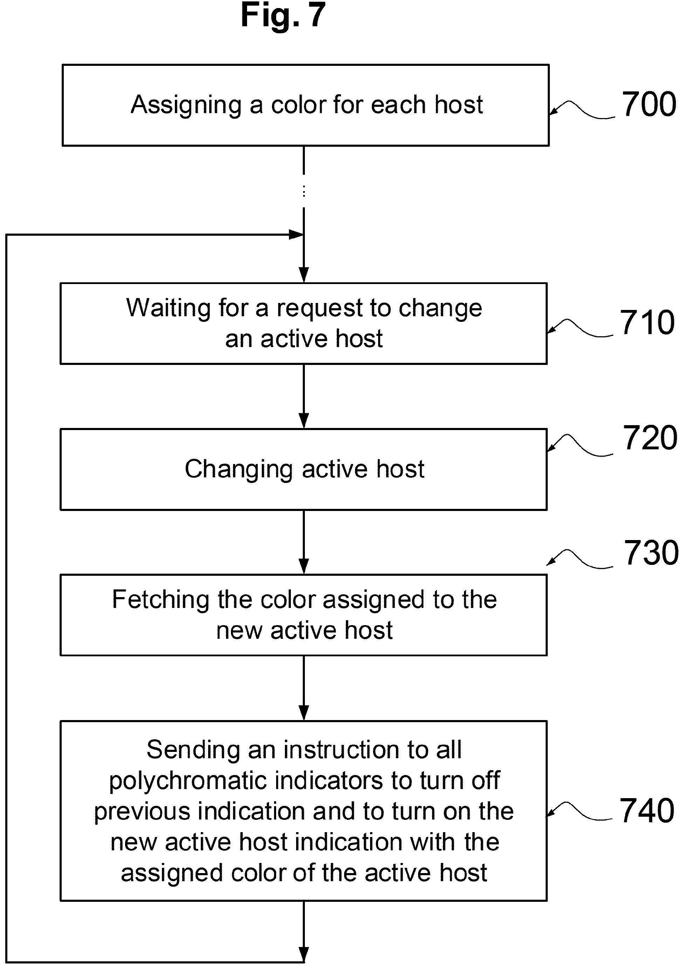

Reference is made now to FIG. 7. FIG. 7 is a flow chart of a method for that can be executed by the KVM switch controller according to some embodiments of the present invention. In step 700 the controller stores for each host port of the KVM switch a color. The color may be assigned through several methods. A default assignment of colors to the hosts may be made in the factory. For example, a two-hosts KVM switch may be pre-set to a setup where host #1 assigned with green color and host #2 assigned with red color.

Additionally or alternatively, the setup can be changed dynamically during operation using a configuration port in the KVM switch. For example, a system administrator may couple his laptop to a special configuration interface or, for example, to the mouse USB port of the KVM switch, open a terminal connection, and in this special setup session, among other tasks, sets the color of each host in the system. Yet another option for the color-host assignment of the KVM switch, may be to set using a software running on one of the hosts in any time by the user. Color assignment may also be performed by typing key sequence from the keyboard (e.g., keyboard shortcuts).

In step 710, the KVM switch controller waits for a request to change the active host from the user. The request event may come from several sources: key press in any device in the KVM system that have switching host keys such as 310x, 410x 112, and/or other switching host keys as are known in the art; keyboard and/or mouse shortcuts; and/or a mouse movement that crosses display boundaries in a single virtual display that includes several physical displays that can be driven from several hosts. After receiving the request to change the active host, in step 720, the **KVM** switch controller may perform the actual switching or the routing of the peripheral device to the new active host. Step 710-730 can include receiving from the user, a switching command, selecting an active host accordingly, and coupling the active host to the user's set of peripheral devices.

Next, in step 730 the **KVM** switch controller fetches the color assigned to the new active host and in step 740 the **KVM** switch controller updates the indicators to the user by sending an instruction to all indicators that indicates the active host to the user. Steps 740 and 750 indicate the active host to the user by illuminating in the color assigned to the active host computer. The indicators are on the keyboard or any other peripheral device coupled to the **KVM** switch. For all polychromatic indication the **KVM** switch may send with the instruction the color to be illuminated.

The communication between the **KVM** switch and the external indicators may be performed using a dedicated connection or an existing connection. For example, the connection with the remote control may be performed using RS232. The communication with a peripheral device may be performed using USB where the indicator is implemented as independent USB device in multidevice USB device were the other device is the HID device.

The user awareness is increased for the host as he works with in a multi host environment and/or multi network environment and/or with multi security levels environment. Security breach by the user is prevented due to the association built in the user's mind between the color of the host and/or network and the security rules apply in each host and/or network. **In** some embodiments, the indication system includes a subsystem to ensure the color indication system is working properly. This may be performed by measuring the current consumption of each monochromatic light source in this subsystem and if the current consumption is not as expected, e.g., indication of a failure in the light source, the system may alert the user or the administrator or disable the indication system. Additionally or alternatively, a sensor based failure detection system may be used.

In some embodiments of the invention, a peripheral devices switching system configured to be coupled to a plurality of host computers includes: at least one set of peripheral devices; a peripheral devices switch, e.g., KVM switch 300, and one or more polychromatic light sources. The peripheral devices switch 300 is configured to be coupled to said at least one set of peripheral devices and said plurality of host computers, where the peripheral devices switch assigns a color to each host computer of the plurality of host computers, and the peripheral devices switch 300 couples between said at least one set of peripheral devices and an active host computer of the plurality of host computers. The one or more polychromatic light sources are included in the peripheral devices switch, the at least one of the peripheral devices of the sets of peripheral devices or both. The peripheral devices switch 300 indicates the active host computer by, for example, illuminating at least one of or a combination of the light sources by the color that is assigned to the active host computer.

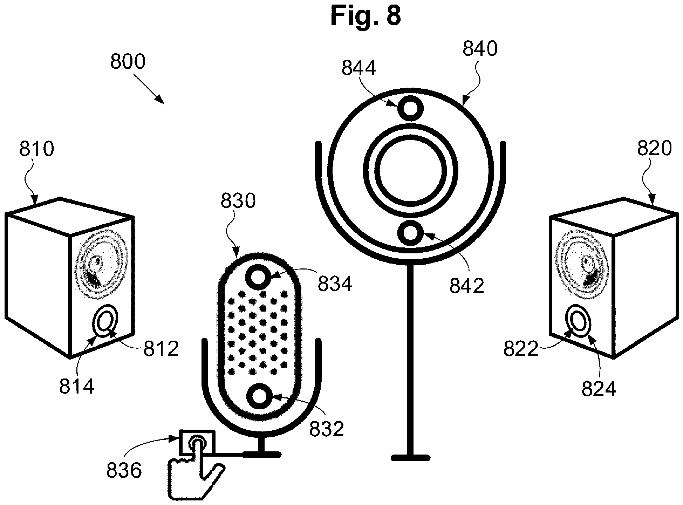

Reference is made now to FIG. 8. FIG. 8 is an illustration view of a set of multimedia peripheral devices 800 coupled to a KVM switch 300 and supporting polychromatic indication in accordance with some embodiments of the present invention. The set of multimedia peripheral devices 800 comprises of left speaker 810, right speaker 820, microphone 830, and camera 840. Left speaker 810, right speaker 820, microphone 830, and camera 840 are all connected to KVM switch 300 (for clarity these connections are not shown in the illustration). The peripheral may use interfaces similar to interfaces 530 and 560 described hereinabove. Speakers 810 and 820 receive through the interfaces a stereo audio stream to be played by the speaker. Audio stream may be in digital format or analog format. In addition, speakers 810 and 820 receive from the KVM switch 300 commands to illuminate polychromatic indicators 812, 814, 822, 824. polychromatic indicator 812 is illuminate in the color associated with the active host whenever the speaker is connected to the active host. Polychromatic indicator 814 is illuminate in the color associated with the active host whenever an active signal is transmitted to the speaker. In an exemplary embodiment of the invention, only polychromatic indicator 812 or polychromatic indicator 814 is provided. Alternatively, indicator 812 or indicator 814 may be monochromatic indication while the other indication is polychromatic indication. In an exemplary embodiment of the invention, Polychromatic indicator 814 illuminates the area around the polychromatic indicator 812 which provide a native illustration for the speaker activity. Polychromatic indicator 822 and 824 act in similar way as Polychromatic indicator 812 and 814.

Microphone 830 transmit audio signals captured by the microphone to KVM switch 300. From KVM switch 300 the audio signal may be transferred to an active host. Audio stream may be in digital format or analog format. Microphone 830 comprises polychromatic indicator 832 configured to be illuminate whenever microphone 830 is connected to an active host with the color associated with the active host. This indication, 832, only indicate to the user that if the microphone will be opened which host will receive the sensed audio signal of the microphone. To actually open the microphone circuitries to transmit an audio signal, a push to talk button 836 is provided. Conditioned upon pressing the push to talk button 836, the microphone transmits the audio signal to KVM switch 300. To indicate that the microphone is open for transmitting audio signals, indication, 834 illuminates in the color associated with the active host.

Camera 840 transmits video signals captured by the camera to KVM switch 300. From KVM switch 300 the video signal may be transferred to an active host. Camera 840 comprises polychromatic indicator 842 configured to be illuminate whenever camera 840 is connected to an active host with the color associated with the active host. This indication, 842, only indicate to the user that if the camera will be opened, which of the hosts will receive the video signal. When the camera transmits the video signal to KVM switch 300, in order to indicate the user that an active video stream is transmitted, indication, 834 illuminates in the color associated with the active host.

In an exemplary embodiment of the invention, indicators 832 and 834 or indicator 842 and 844 are collocated with indicator 834 or indicator 844 are surrounding indicator 832 or indicator 842 respectively. In an exemplary embodiment of the invention, only polychromatic indicator 832 or polychromatic indicator 834 is provided. Alternatively, indicator 832 or indicator 834 may be monochromatic indication while the other indication is polychromatic indication. In an exemplary embodiment of the invention, only polychromatic indicator 842 or polychromatic indicator 844 is provided. Alternatively, indicator 842 or indicator 844 may be monochromatic indication while the other indication is polychromatic indication.

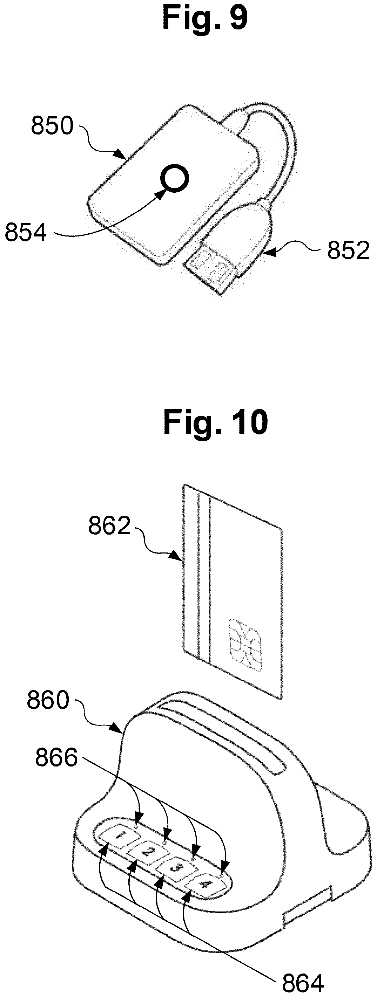

Reference is made now to FIG. 9. FIG. 9 is an illustration view of an external disk device 850 coupled to a KVM switch 300 and supporting polychromatic indication in accordance with some embodiments of the present invention. External disk device 850 is connected to KVM switch 300 using USB connector 852. External disk device 850 comprises polychromatic indicator 854. In prior art external disk devices, the indication is used to indicate whenever there is an active read or write transaction with device 850. According to the present invention, whenever there is an active read or write transaction with device 850 polychromatic indicator 812 is illuminate in the color associated with the active host. The USB bus is used both to transfer the read/write data for the disk as well as the polychromatic illumination command. In an exemplary embodiment of the invention, composite device USB interface is used and the disk is one USB device that communicate with the active host while the polychromatic indicator has a controller which is another USB device and both devices share the same USB bus.

Reference is made now to FIG. 10. FIG. 10 is an illustration view of a multi-domain smart-card reader 860 coupled to a plurality of hosts 250 and supporting polychromatic indication in accordance with some embodiments of the present invention. Multi-domain smart-card reader 860 is a card reader that is configured to accept smart-card 862 that is used to identify and authenticate a user to a plurality of hosts 250. Multi-domain smart-card reader 860 may be connected to KVM switch 300 that provide the coupling to the plurality of hosts 250 or may integrate the KVM switch (i.e., the card reader peripheral switch) inside the multi-domain smart-card reader 860 enclosure. Upon entering card 862 to multi-domain smart-card reader 860 card slot the user may authenticate himself in front of one of the hosts that supported by the multi-domain smart-card reader 860 (in this exemplary embodiment four hosts are supported). To authenticate to each of the hosts 250, the user needs to press one of the push-buttons 864. Upon successful authentication the corresponding indicator 866 will illuminate in the color associated with the authenticating host. Multi-domain smart-card reader 860 may keep coupling with a single card to several host simultaneously. Each one of indicator 866 will illuminate in the color associated with the corresponding host. To discard authentication from a specific host, the user may press one of the push-buttons 864 again. The corresponding indicator 866 will turn off. Upon removing smart-card 862 from multi-domain smart-card reader 860, all authentication with the host will be discarded.

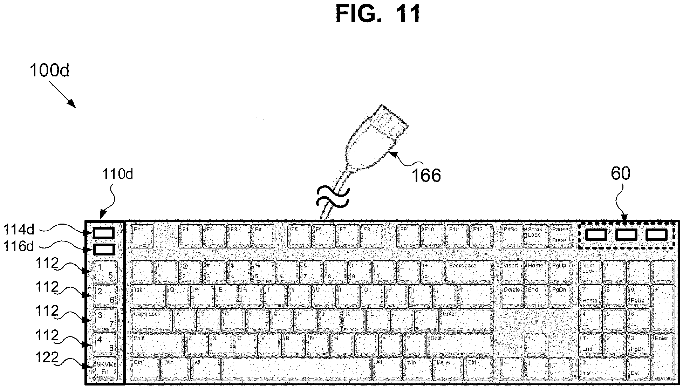

Reference is made now to FIG. 11. FIG. 11 is an illustration of another keyboard 100d with KVM switch support. As in previous embodiment of such a keyboard 100a, 100b and 100c there are additions keys and indicators to the standard keyboard including four KVM control keys 112 that are configured to select active host 250, KVM control key 122 that is special KVM function key, and indicators 114d and 116d that are used to indicate special peripheral status of devices connected to the KVM switch that is connected to keyboard 110d. Key 122 may be used to extend the selection of the active hosts from four to eight in the following way. For selecting hosts #1 to host #4 the user presses on one of keys 112. The digit 1 - 4 over the upper left side of keys 112 cap is illuminated with the color assigned to the corresponding host computer. For selecting hosts #1 to host #8 the user presses on key 122 and then on one of keys key 112. The digit 5 - 8 over the lower right side of keys 112 cap is illuminated with the color assigned to the corresponding host computer 250. Other functions may be assigned to key 112 by sequences of multiple presses, long press or simultaneous press with other keys.

Indicators 114d and 116d may be used to indicate the connection status of a specific peripheral devices that are connected to the KVM switch. For example, indicator 114d may be used to indicate by illuminating with the color associated with host 250 that a card reader is authenticated with and indicator 116d may be used to indicate by illuminating with the color associated with host 250 that a speaker is connected to be the KVM switch.

Interface 166, illustrated in the figure by a cable and a connector, is implementing the interface between KVM switch 300 and keyboard 100d. As illustrated in Figure 6 and the accompanying text in the description, this interface may be split to two different communication interfaces: (1) a standard communication from the peripheral to the host, and (2) an additional, extended functionality, communication between the KVM switch 300 and keyboard 100d. This additional communication interface may be used to provide security functions to lock indicators 60.

Some secure KVM switches, for example, the ones that are certified to protection security profile of National Information Assurance Partnership (NIAP), blocks the lock keys status commands that are sent by the host in response to lock keys press events and are intent to indicate the lock keys status by lock indicators 60. This blocking is done since sending the lock keys status commands violates the security policy of having the keyboard device a unidirectional device that only transmit data from the keyboard to the hosts. As will be seen next, having two separated interfaces: one for the standard keyboard, and another one for the communication between the KVM switch and the keyboard, provide a solution for relaxation of this lock indication blocking requirement.

In an exemplary embodiment of the invention, interface 166 may be USB. Optionally, the USB interface may be composite device comprises two USB devices transferring data on the same USB bus, connectors and cable. Alternatively, interface 166 may be two completely separate communication protocols, optionally, running over the same cable and connectors. For example, the keyboard may use USB Type C connector which have standard USB data pin and additional high-speed data pins that can be used out of the standard as the additional extended functionality communication between the KVM switch and the keyboard.

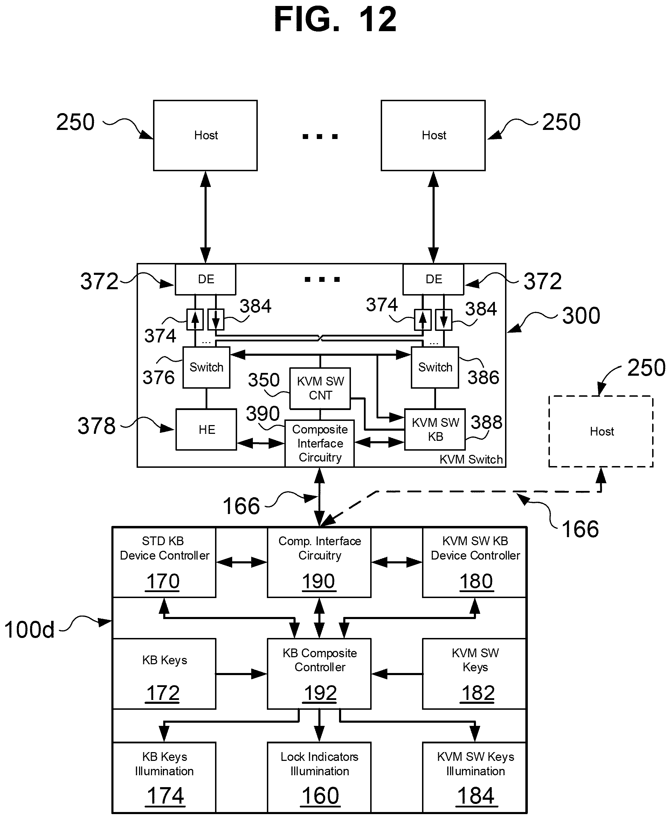

Reference is made now to FIG. 12. FIG. 12 is a block diagram of a keyboard 100d with support of interface separation between the standard keyboard functionality and the KVM switch support functionality in accordance with some embodiment of the present invention. Keyboard 100d is connected to KVM switch 300 using interface 166 (illustrated in Figure 10 too). In an exemplary embodiment of the invention, interface 166 is USB communication protocol. In some embodiment, the USB cable and USB connector are of USB 2.X protocol and the connector type is USB type A. Alternatively, USB cable and connector are of USB 3.X protocol and the connector type is USB type C. Additionally or alternatively, other USB protocol and non-USB protocol are used and other type of connectors are used as well. KVM switch 300 is connected to a plurality of host 250. Alternatively, Keyboard 100d may be connected directly to host 250 as illustrated in dashed lines in Figure 11. Keyboard 100d comprises nine elements: standard keyboard device controller 170, standard keyboard keys 172, keyboard keys illumination elements 174, KVM switch keyboard device controller 180, KVM switch keys 182, KVM switch keys illumination elements 184, composite interface circuitry 190, keyboard composite controller 192, and lock indication illumination elements 160.

When the keyboard is connected directly to host 250, keyboard 100d act as a standard keyboard. Composite interface circuitry 190 detect that keyboard 100d is connected directly to host 250 so composite interface circuitry 190 instructs keyboard composite controller 192 to give full control in keys (172, 182) and illumination elements (174, 184, 160) to standard keyboard device controller 170. In this mode of operation, the keyboard act as a standard keyboard. Standard keyboard device controller 170 can scan keyboard keys 172 and upon press, i.e., make or break key events the standard keyboard device controller 170 sends the appropriate command to host 250 through composite interface circuitry 190 and interface 166. Composite interface circuitry 190 performs transparent (non-composite) transfer, and interface 166 in this case is carrying a single keyboard device interface, e.g., standard USB HID KB device.

Polychromatic illumination functionality under the standard keys (illumination elements 174) is also coupled by keyboard composite controller 192 to standard keyboard device controller 170. With proper software support in host 250. Host 250 can control the illumination in general and the color under each key, in specific. For example, some game application may use it to indicate "hot keys" for game control. Lock indication illumination elements 160 is the embodiment of the indication 60 in Figure 11. Lock indication illumination elements 160 may be implemented using polychromatic light sources. In the case of direct connection between keyboard 100d and host 250, keyboard composite controller 192 couples the lock indication illumination elements 160 to standard keyboard device controller 170 as well. In this case, the lock keys status commands from host 250 that comes as a response of pressing the lock keys (caps lock, num lock, scroll lock) will cause standard keyboard device controller 170 to illuminate lock indication illumination elements 160 with a default color, typically green or white.

KVM switch keys 182 are embodiment of keys 112 and 122 of keyboard 100d or keys 112 of keyboards 100a, 100b and 100c. KVM switch keys illumination elements 184 are embodiment of polychromatic illumination over keys 112 and 122 as well as indicator 114d and 116d of keyboard 100d and indicators 114, 116 and 118 of keyboard 100a, 100b and 100c. KVM switch keys 182 and the corresponding KVM switch keys illumination elements 184 may be used, with proper software support as keyboard extensions such as multimedia or gaming extension keys. Keyboard composite controller 192 couples KVM switch keys 182 and KVM switch keys illumination elements 184 to standard keyboard device controller 170 as well and upon pressing these keys, standard keyboard device controller 170 send command to host 250 and upon host 250 illumination commands to standard keyboard device controller 170, the elements is illuminated, optionally, by polychromatic color. During direct keyboard to host connection KVM switch keyboard device controller 180 is disabled.

When composite interface circuitry 190 detects a connection to KVM switch 300, keyboard 100d behave differently, this different keyboard behavior, refers as "KVM switch mode".

In keyboard's KVM switch mode, composite interface circuitry 190 instructs keyboard composite controller 192 to split the responsibility of sensing, i.e., scanning the keys, between standard keyboard device controller 170 and KVM switch keyboard device controller 180. Keyboard keys 172 are scanned by standard keyboard device controller 170 and KVM switch keys 182 by KVM switch keyboard device controller 180. Composite interface circuitry 190 gets the keys press events commands, i.e., key make and break commands of keyboard keys 172, from standard keyboard device controller 170 and the keys make and break commands of KVM switch keys 182 from KVM switch keyboard device controller 180. In an exemplary embodiment of the invention, composite interface circuitry 190 open two devices i.e., composite device on interface 166, alternatively, composite interface circuitry 190 communicate through two independent interfaces with KVM switch 300. With regards to the indications, i.e., illumination elements (174, 160 and 184), composite interface circuitry 190 instructs keyboard composite controller 192 to couple the indication elements to KVM switch keyboard device controller 180. This coupling allows KVM switch 300to give the user a color indication regarding the active host as described in the embodiments of Figure 5A - Figure 5C described hereinabove. In addition, this coupling enables a secure KVM switch to control the lock indication illumination elements 160 (i.e., lock indicators 60) in a secure manner as will be explained hereinafter. For keys 112 in KVM switch keys 182, KVM switch keyboard device controller 180 only illuminates, in the color associate with the active host, the key corresponding to the active host, or in the case were the key 112 is used for selecting two or more hosts, only portion area of the key. For example, for the top key 112 labeled with '1' and '5' when host #1 is the active (selected) host, only the area under the label '1' (top-left) will be illuminated with the color associated with host #1, while when host #5 is the active (selected) host, only the area under the label 5 (bottom-right) will be illuminated with the color associated with host #5. Dissimilar to the illumination of the other keys, in keys 112 only one key, or area on the key, is illuminated while the other keys 112, e.g., keys ('2'+'6', '3'+'7' and '4'+'8') are not illuminated.

For security reasons, lock indication illumination elements 160 in keyboard's KVM switch mode may be controlled by KVM switch keyboard device controller 180. Composite interface circuitry 190 instructs keyboard composite controller 192 to couple lock indication illumination elements 160 to KVM switch keyboard device controller 180. In this KVM switch mode, while lock keys (Caps Lock, Num Lock, Scroll Lock) make and break events are transmitted to host 250 through standard keyboard device controller 170, the lock keys status commands from host 250, i.e., the commands for lock keys states that targeted to be displayed by lock indication illumination elements 160 may returned to keyboard 100d through different interface path. In this path, the lock keys status commands transferred to KVM switch keyboard device controller 180. Unlike in keyboard-host direct connection, KVM switch keyboard device controller 180 may illuminate the lock indication illumination elements 160 with polychromatic color that is associated with the active host. To complete the picture, reference is made now to the internal block diagram of the KVM switch 300. The communication between keyboard 100d and KVM switch 300 is accomplished between composite interface circuitry 190 of the keyboard and composite interface circuitry 390 of the KVM switch. In an exemplary embodiment of the invention, both sides are communicating using logical level composite device protocol such as USB. Alternatively, complete independent interfaces are used, optionally, over the same cable and connector. For example, USB type C connectors might be used but both keyboard 100d and KVM switch 300 may use some of the non-mandatory USB pins, such as high-speed data pins to run a separate communication interface between a keyboard controller 388 in KVM switch 300 and KVM switch keyboard device controller 180 in keyboard 100d. Inside KVM switch 300 data, commands, or messages that was initiated by standard keyboard device controller 170 will be transferred by composite interface circuitry 390 to a host emulator 378. Host emulator can communicate bidirectional with standard keyboard device controller 170 but can only send the keypress commands, i.e., the make and break events of the keys of the keyboard, to the active host 250. This is done through switch 376 that selects the active host 250 and a unidirectional enforcing element 374 that transfer data only from host emulator 378 to a device emulator 372 that is connected to the active host. Active host 250 is communicate bidirectionally with device emulator 372 so that device emulator 372 may get the responses for lock keys press events, i.e., the lock keys status commands that are needed for setting of lock indication illumination elements 160. However, since device emulator 372 cannot communicate back with host emulator 378, device emulator 372 may communicate the lock keys status commands through a unidirectional enforcing element 384 and switch 386 to keyboard controller 388. Keyboard controller 388 using the composite or separate interface between composite interface circuitry 190 in KVM switch 300 and composite interface circuitry 190 in keyboard 100d may communicate the lock keys status commands, that are the responses for lock keys presses, to KVM switch keyboard device controller 180. Whenever enhanced cyber security for this functionality is required, device emulator 372 may create internally three signals on three wires, one for each lock indication. The first wire signals the Caps Lock state, the second wire signals the Num Lock state and the third wire signals the Scroll Lock state. These three signals from the device emulator, that is connected to the active host, are selected by switch 386 and go separately via point-to-point hardware wiring, switching or routing through keyboard controller 388, composite interface circuitry 390, composite interface circuitry 190, KVM switch keyboard device controller 180, and keyboard composite controller 192 to control lock indication illumination elements 160. In other embodiments, the lock indication response goes through keyboard controller 388 to composite interface circuitry 390 that using the appropriate bus through the composite interface send the lock indication response to composite interface circuitry 190 that in its turn froward it to KVM switch keyboard device controller 180 that controls lock indication illumination elements 160, optionally, with the appropriate color assigned to the active host.

KVM switch 300 also comprises KVM switch controller 350 (illustrated previously in Figure 5) that set the active host 250 using at least key presses over keys 310a - 310d on KVM switch 300 or key presses on keys 122 on keyboards 100a - 100d. The active host 250 selection is provided simultaneously to switch 376, switch 378, and keyboard controller 388. Keyboard controller 388 transfer the active host data to KVM switch keyboard device controller 180 that control the feedback to the user using the polychromatic light sources in keyboard keys illumination elements 174, lock indication illumination elements 160 and KVM switch keys illumination elements 184.

In an exemplary embodiment of the invention, keyboard 100d comprise composite device. Lock keys make and break events are transferred from the keyboard through the KVM switch to the host 250 using a first device and the lock keys status commands are received from the host 250 through KVM switch 300 to the keyboard using a second device. Alternatively, keyboard 100d comprise two separate devices. The lock keys make and break events are transferred from keyboard to host through KVM switch using a first device and the responses are received from the KVM switch to the keyboard using a second device.

The terms "comprises", "comprising", "includes", "including", "having" and their conjugates mean "including but not limited to".

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Various embodiments have been presented. Each of these embodiments may of course include features from other embodiments presented, and embodiments not specifically described may include various features described herein.

## Claims

1. A peripheral devices switching system configured to be coupled to a plurality of host computers (250), the system comprising:
at least one set of peripheral devices (100, 220, 230) ; and
a peripheral devices switch (240, 300, 400) that is configured to be coupled to said at least one set of peripheral devices and said plurality of host computers, wherein the peripheral devices switch (240, 300, 400) is configured to couple between said at least one set of peripheral devices (100, 220, 230) and an active host computer of the plurality of host computers (250),
**characterized in that**
at least one peripheral device of the at least one set of peripheral devices comprises one or more polychromatic light sources;
the peripheral devices switch (240, 300, 400) is configured to be assigned with a color corresponding to each host computer of the plurality of host computers (250), and
the peripheral devices switch (240, 300, 400) is configured to indicate the active host computer (250) by instructing the at least one peripheral device (100, 220, 230) to illuminate the one or more polychromatic light sources by the color that is assigned to the active host computer.

2. The system of claim 1, wherein the peripheral devices switch (240, 300, 400) further comprises a remote control (260).

3. The system of claim 1 or 2, wherein the set of peripheral devices comprises
- a keyboard (100) that comprises one or more polychromatic light source located under or adjacent to one or more keys of said keyboard, and/or
- a pointing device (220) that comprises one or more polychromatic light source.

4. The system of one of claims 1 to 3, wherein the set of peripheral devices comprises a microphone (830) and comprises one or more polychromatic light source and when the microphone is open to the active host, the one or more polychromatic light source illuminate in the color assigned to the active host computer that receive voice signals from said microphone.

5. The system of one of claims 1 to 4, wherein the one or more polychromatic light source comprises Red-Green-Blue (RGB) LEDs.

6. The system of one of claims 1 to 5, wherein the one or more polychromatic light source comprises two or more monochromatic light sources.

7. The system of one of claims 1 to 6, wherein the peripheral devices switch is a secured peripheral devices switch.

8. A keyboard (100) configured to be coupled with a KVM switch (240, 300, 400), the keyboard comprising:
a plurality of standard keyboard keys (11), wherein the keys are associated with one or more polychromatic light sources;
a controller; and
an interface configured to enable communication between the controller and the KVM switch (240, 300, 400),
**characterized in that**
the controller is configured to receive instructions including the color to be illuminated from the KVM switch (240, 300, 400), -and condition upon said instructions the controller activates the one or more polychromatic light sources to illuminate with the color assigned to a host computer (250) coupled to the KVM switch to indicate the active host computer (250).

9. The keyboard of claim 8, wherein the keyboard further comprises a plurality of KVM control keys (112),
wherein the plurality of KVM control keys (112) comprise one or more polychromatic light sources, each KVM control key of the plurality of KVM control keys being configured to select an active host by the KVM switch,
wherein the controller scans the plurality of KVM control keys (112) and upon pressing any KVM control keys (112) sends a message to the KVM switch (240, 300, 400) through the interface,
wherein the KVM switch (240, 300, 400) instructs the controller to illuminate the keyboard (100) with a color assigned to the active host computer (250), and
wherein, conditioned upon the KVM switch instruction, the controller controls the one or more polychromatic light sources to illuminate a corresponding KVM control key (112) with the color assigned to the active host.

10. The keyboard of claim 8 or 9, wherein the interface is one of (a) Serial; (b) PS/2; and (c) USB interface.

11. The keyboard of one of claims 8 to 10, wherein the illumination of the plurality of standard keyboard keys (11) is performed using RGB LEDs.

12. The keyboard of one of claims 8 to 11, wherein the controller receives messages through the interface from the KVM switch on event of switching active host, said messages comprises color information.

13. The keyboard of one of claims 8 to 12, wherein said plurality of standard keyboard keys (11) comprises any one of or any combination of (a) Latin letters (a-z) keys, (b) digit keys, (c) punctuation keys, (d) symbol keys, (e) control keys, (f) function keys, (g) navigation keys, (h) numeric keypad keys, and (i) any non-Latin letter keys, and/or wherein said plurality of standard keyboard keys (11) complies with ISO/IEC 9995 keyboard standard series.

14. A method of indicating an active host computer (250) of a plurality of host computers while working with a peripheral devices switch (240, 300, 400), the method comprises:
(a) receiving, by a KVM controller of the peripheral devices switch (240, 300, 400), a color assigned to each of the plurality of host computers (250);
(b) receiving, by the KVM controller of the peripheral devices switch (240, 300, 400), a switching command from the user that indicates a particular host computer (250) of the plurality of host computers to be coupled to the peripheral devices switch (240, 300, 400), wherein the particular host computer is the active host computer;
(c) coupling, by the peripheral devices switch (240, 300, 400), the active host computer (250) to at least one set of peripheral devices (100, 220, 230); and
(d) sending, by the KVM switch controller an instruction including for a polychromatic indication the color to be illuminated to thereby illuminate one or more polychromatic light sources located in at least one peripheral device of the set of peripheral devices to indicate the active host computer, wherein the illumination is with the color assigned to the active host computer.

15. The method of claim 14, wherein
- the at least one set of peripheral devices comprises a keyboard with polychromatic light sources, and wherein step (d) is performed by illuminating the polychromatic light sources of the keyboard, and/or
- in step (c) a selected peripheral device is coupled to a selected host computer which is different from the host computer coupled to all other peripheral devices in the at least one set of peripheral devices, and wherein in step (d) said selected peripheral device is indicated by illuminating the selected peripheral device using the assigned color for the selected host computer, and/or
- the polychromatic light sources are RGB LEDs, and/or
- the peripheral devices switch is secured peripheral devices switch.

16. A keyboard, video, mouse (KVM) switch (240, 300, 400) for indicating, via a set of peripheral devices, an active host computer (250) of a plurality of host computers while working with said KVM switch, said KVM switch (240, 300, 400) comprising:
a peripheral devices interface circuitry (360), and
a KVM switch controller (350),
**characterized in that**
said KVM switch controller (350) is configured to send a command to set a polychromatic indication of the active host computer (250) to any one of or any combination of a set of peripheral devices (100, 220, 230) via the peripheral devices interface circuitry (360), wherein said polychromatic indication indicates a color assigned to a host coupled to the KVM switch.

## Patentansprüche

1. Peripheriegeräte-Schaltsystem, das dazu konfiguriert ist, mit einer Vielzahl von Host-Computern (250) gekoppelt zu werden, wobei das System umfasst:
mindestens einen Satz von Peripheriegeräten (100, 220, 230); und
einen Peripheriegeräte-Schalter (240, 300, 400), der dazu konfiguriert ist, mit dem mindestens einen Satz von Peripheriegeräten und der Vielzahl von Host-Computern gekoppelt zu werden, wobei der Peripheriegeräte-Schalter (240, 300, 400) dazu konfiguriert ist, zwischen dem mindestens einen Satz von Peripheriegeräten (100, 220, 230) und einem aktiven Host-Computer der Vielzahl von Host-Computern (250) zu koppeln,
**dadurch gekennzeichnet, dass**
mindestens ein Peripheriegerät des mindestens einen Satzes von Peripheriegeräten eine oder mehrere polychromatische Lichtquellen umfasst;
der Peripheriegeräte-Schalter (240, 300, 400) dazu konfiguriert ist, eine Farbe entsprechend jedem Host-Computer der Vielzahl von Host-Computern (250) zugewiesen zu werden, und
der Peripheriegeräte-Schalter (240, 300, 400) dazu konfiguriert ist, den aktiven Host-Computer (250) anzuzeigen, indem er das mindestens eine Peripheriegerät (100, 220, 230) anweist, die einen oder mehreren polychromatischen Lichtquellen mit der Farbe zu beleuchten, die dem aktiven Host-Computer zugewiesen ist.

2. System nach Anspruch 1, wobei der Peripheriegeräte-Schalter (240, 300, 400) außerdem eine Fernbedienung (260) umfasst.

3. System nach Anspruch 1 oder 2, wobei der Satz von Peripheriegeräten umfasst
- eine Tastatur (100), die eine oder mehrere polychromatische Lichtquellen umfasst, die sich unter oder neben einer oder mehreren Tasten der Tastatur befinden, und/oder
- eine Zeigevorrichtung (220), die eine oder mehrere polychromatische Lichtquellen umfasst.

4. System nach einem der Ansprüche 1 bis 3, wobei der Satz von Peripheriegeräten ein Mikrofon (830) und eine oder mehrere polychromatische Lichtquellen umfasst, und wenn das Mikrofon für den aktiven Host geöffnet ist, die einen oder mehreren polychromatischen Lichtquellen in der Farbe leuchten, die dem aktiven Hostcomputer zugewiesen ist, der Sprachsignale von dem Mikrofon empfängt.

5. System nach einem der Ansprüche 1 bis 4, wobei die einen oder mehreren polychromatischen Lichtquellen Rot-Grün-Blau- (RGB) LEDs umfassen.

6. System nach einem der Ansprüche 1 bis 5, wobei die einen oder mehreren polychromatischen Lichtquellen zwei oder mehrere monochromatische Lichtquellen umfassen.

7. System nach einem der Ansprüche 1 bis 6, wobei der Peripheriegeräte-Schalter ein gesicherter Peripheriegeräte-Schalter ist.

8. Tastatur (100), die dazu konfiguriert ist, mit einem KVM-Schalter (240, 300, 400) gekoppelt zu werden, wobei die Tastatur umfasst:
eine Vielzahl von Standardtastaturtasten (11), wobei die Tasten mit einer oder mehreren polychromatischen Lichtquellen verknüpft sind;
eine Steuerung; und
eine Schnittstelle, die dazu konfiguriert ist, die Kommunikation zwischen der Steuerung und dem KVM-Schalter (240, 300, 400) zu ermöglichen,
**dadurch gekennzeichnet, dass**
die Steuerung derart konfiguriert ist, Anweisungen einschließlich der zu beleuchtenden Farbe von dem KVM-Schalter (240, 300, 400) zu erhalten, - und bedingt durch diese Anweisungen die Steuerung die einen oder mehreren polychromatischen Lichtquellen aktiviert, um mit der Farbe zu leuchten, die einem mit dem KVM-Schalter gekoppelten Host-Computer (250) zugewiesen ist, um den aktiven Host-Computer (250) anzuzeigen.

9. Tastatur nach Anspruch 8, wobei die Tastatur außerdem eine Vielzahl von KVM-Steuertasten (112) umfasst,
wobei die Vielzahl von KVM-Steuertasten (112) eine oder mehrere polychromatische Lichtquellen umfassen, wobei jede KVM-Steuertaste der Vielzahl von KVM-Steuertasten dazu konfiguriert ist, einen aktiven Host durch den KVM-Schalter auszuwählen,
wobei die Steuerung die Vielzahl von KVM-Steuertasten (112) abtastet und beim Drücken einer beliebigen KVM-Steuertaste (112) eine Nachricht über die Schnittstelle an den KVM-Schalter (240, 300, 400) sendet,
wobei der KVM-Schalter (240, 300, 400) die Steuerung anweist, die Tastatur (100) mit einer Farbe zu beleuchten, die dem aktiven Host-Computer (250) zugewiesen ist, und
wobei, bedingt durch die KVM-Schaltanweisung, die Steuerung die einen oder mehreren polychromatischen Lichtquellen steuert, um eine entsprechende KVM-Steuertaste (112) mit der Farbe zu beleuchten, die dem aktiven Host zugewiesenen ist.

10. Tastatur nach Anspruch 8 oder 9, wobei die Schnittstelle eine der folgenden ist: (a) serielle Schnittstelle; (b) PS/2-Schnittstelle; und (c) USB-Schnittstelle.

11. Tastatur nach einem der Ansprüche 8 bis 10, wobei die Beleuchtung der Vielzahl von Standardtasten (11) der Tastatur mit RGB-LEDs durchgeführt ist.

12. Tastatur nach einem der Ansprüche 8 bis 11, wobei die Steuerung über die Schnittstelle Nachrichten vom KVM-Schalter über ein Schaltereignis des aktiven Hosts empfängt, wobei die Nachrichten Farbinformationen enthalten.

13. Tastatur nach einem der Ansprüche 8 bis 12, wobei die Vielzahl von Standardtasten (11) eine beliebige Taste oder eine beliebige Kombination von (a) Tasten für lateinische Buchstaben (a-z), (b) Zifferntasten, (c) Satzzeichen, (d) Symboltasten, (e) Steuertasten, (f) Funktionstasten, (g) Navigationstasten, (h) Tasten des numerischen Tastenblocks und (i) beliebigen Tasten für nicht-lateinische Buchstaben umfasst, und/oder wobei die Vielzahl von Standardtasten (11) der Tastaturnormreihe ISO/IEC 9995 entspricht.

14. Verfahren zum Anzeigen eines aktiven Host-Computers (250) aus einer Vielzahl von Host-Computern, während mit einem Peripheriegeräte-Schalter (240, 300, 400) gearbeitet wird, wobei das Verfahren umfasst:
(a) Empfangen, durch eine KVM-Steuerung des Peripheriegeräte-Schalters (240, 300, 400), einer Farbe, die jedem der Vielzahl von Host-Computern (250) zugewiesen ist;
(b) Empfangen, durch die KVM-Steuerung des Peripheriegeräte-Schalters (240, 300, 400) eines Schaltbefehls von dem Benutzer, der einen bestimmten Host-Computer (250) aus der Vielzahl von Host-Computern anzeigt, der mit dem Peripheriegeräte-Schalter (240, 300, 400) gekoppelt werden soll, wobei der bestimmte Host-Computer der aktive Host-Computer ist;
(c) Koppeln, durch den Peripheriegeräte-Schalter (240, 300, 400), des aktiven Host-Computers (250) mit mindestens einem Satz von Peripheriegeräten (100, 220, 230); und
(d) Senden, durch die KVM-Schaltersteuerung, eines Befehls, der für eine polychromatische Anzeige die zu beleuchtende Farbe enthält, um dadurch eine oder mehrere polychromatische Lichtquellen zu beleuchten, die sich in mindestens einem Peripheriegerät des Satzes von Peripheriegeräten befinden, um den aktiven Host-Computer anzuzeigen, wobei die Beleuchtung mit der dem aktiven Host-Computer zugewiesenen Farbe erfolgt.

15. Verfahren nach Anspruch 14, wobei
- der mindestens eine Satz von Peripheriegeräten eine Tastatur mit polychromatischen Lichtquellen umfasst, und wobei Schritt (d) durch Beleuchten der polychromatischen Lichtquellen der Tastatur durchgeführt wird, und/oder
- in Schritt (c) ein ausgewähltes Peripheriegerät mit einem ausgewählten Host-Computer gekoppelt wird, der sich von dem Host-Computer unterscheidet, der mit allen anderen Peripheriegeräten in dem mindestens einen Satz von Peripheriegeräten gekoppelt ist, und wobei in Schritt (d) das ausgewählte Peripheriegerät durch Beleuchten des ausgewählten Peripheriegeräts unter Verwendung der zugewiesenen Farbe für den ausgewählten Host-Computer angezeigt wird, und/oder
- die polychromatischen Lichtquellen RGB-LEDs sind, und/oder
- der Peripheriegeräte-Schalter durch den Peripheriegeräte-Schalter gesichert ist.

16. Tastatur-, Video-, Maus-(KVM)-Schalter (240, 300, 400) zum Anzeigen eines aktiven Host-Computers (250) aus einer Vielzahl von Host-Computern über einen Satz von Peripheriegeräten, während mit dem KVM-Schalter gearbeitet wird, wobei der KVM-Schalter (240, 300, 400) umfasst:
eine Peripheriegeräte-Schnittstellenschaltung (360) und
eine KVM-Schaltersteuerung (350),
**dadurch gekennzeichnet, dass**
die KVM-Schaltersteuerung (350) dazu konfiguriert ist, einen Befehl zum Einstellen einer polychromatischen Anzeige des aktiven Host-Computers (250) an ein beliebiges oder eine beliebige Kombination eines Satzes von Peripheriegeräten (100, 220, 230) über die Peripheriegeräte-Schnittstellenschaltung (360) zu senden, wobei die polychromatische Anzeige eine Farbe anzeigt, die einem mit dem KVM-Schalter gekoppelten Host zugewiesen ist.

## Revendications

1. Système de commutation de dispositifs périphériques configuré de manière à être couplé à une pluralité d'ordinateurs hôtes (250), le système comprenant:
au moins un ensemble de dispositifs périphériques (100, 220, 230); et
un commutateur de dispositifs périphériques (240, 300, 400) qui est configuré pour être couplé audit ou auxdits ensembles de dispositifs périphériques et à ladite pluralité d'ordinateurs hôtes, dans lequel le commutateur de dispositifs périphériques (240, 300, 400) est configuré pour être couplé entre ledit ou lesdits ensembles de dispositifs périphériques (100, 220, 230) et un ordinateur hôte actif de la pluralité d'ordinateurs hôtes (250),
**caractérisé en ce que**
au moins un dispositif périphérique du ou des ensembles de dispositifs périphériques comprend une ou plusieurs sources lumineuses polychromatiques,
le commutateur de dispositifs périphériques (240, 300, 400) est configuré de manière à ce qu'on lui attribue une couleur correspondant à chaque ordinateur hôte de la pluralité d'ordinateurs hôtes (250), et
le commutateur de dispositifs périphériques (240, 300, 400) est configuré pour indiquer l'ordinateur hôte actif (250) en ordonnant au ou aux dispositifs périphériques (100, 220, 230) d'allumer la ou les sources lumineuses polychromatiques dans la couleur qui est attribuée à l'ordinateur hôte actif.

2. Système selon la revendication 1, dans lequel le commutateur de dispositifs périphériques (240, 300, 400) comprend en outre une télécommande (260).

3. Système selon la revendication 1 ou 2, dans lequel l'ensemble de dispositifs périphériques comprend
- un clavier (100) qui comprend une ou plusieurs sources lumineuses polychromatiques situées sous ou à côté d'une ou plusieurs touches dudit clavier, et/ou
- un dispositif de pointage (220) comprenant une ou plusieurs sources lumineuses polychromatiques.

4. Système selon l'une des revendications 1 à 3, dans lequel l'ensemble de dispositifs périphériques comprend un microphone (830) et comprend une ou plusieurs sources lumineuses polychromatiques et lorsque le microphone est ouvert à l'hôte actif, la ou les sources lumineuses polychromatiques s'allument dans la couleur attribuée à l'ordinateur hôte actif recevant des signaux vocaux provenant dudit microphone.

5. Système selon l'une des revendications 1 à 4, dans lequel la ou les sources lumineuses polychromatiques comprennent des LED Rouge-Vert-Bleu (RVB).

6. Système selon l'une des revendications 1 à 5, dans lequel la ou les sources lumineuses polychromatiques comprennent deux ou plusieurs sources lumineuses monochromatiques.

7. Système selon l'une des revendications 1 à 6, dans lequel le commutateur de dispositifs périphériques est un commutateur de dispositifs périphériques sécurisé.

8. Clavier (100) configuré de manière à être couplé à un commutateur KVM (240, 300, 400), le clavier comprenant:
une pluralité de touches de clavier standard (11), dans lequel les touches sont associées à une ou plusieurs sources lumineuses polychromatiques;
un contrôleur; et
une interface configurée pour permettre la communication entre le contrôleur et le commutateur KVM (240, 300, 400),
**caractérisé en ce que**
le contrôleur est configuré pour recevoir des instructions, y compris la couleur devant être allumée provenant du commutateur KVM (240, 300, 400), et en fonction desdites instructions, le contrôleur active la ou les sources lumineuses polychromatiques pour s'allumer dans la couleur attribuée à un ordinateur hôte (250) couplé au commutateur KVM pour indiquer l'ordinateur hôte actif (250).

9. Clavier selon la revendication 8, dans lequel le clavier comprend en outre une pluralité de touches de commande KVM (112),
dans lequel la pluralité de touches de commande KVM (112) comprennent une ou plusieurs sources lumineuses polychromatiques, chaque touche de commande KVM de la pluralité de touches de commande KVM étant configurée pour sélectionner un hôte actif par l'intermédiaire du commutateur KVM,
dans lequel le contrôleur analyse la pluralité de touches de commande KVM (112) et lorsque l'on appuie sur l'une des touches de commande KVM (112) envoie un message au commutateur KVM (240, 300, 400) via l'interface,
dans lequel le commutateur KVM (240, 300, 400) ordonne au contrôleur d'éclairer le clavier (100) d'une couleur attribuée à l'ordinateur hôte actif (250), et
dans lequel, conditionné par l'instruction du commutateur KVM, le contrôleur commande ladite ou lesdites sources lumineuses polychromatiques pour éclairer une touche de commande KVM correspondante (112) de la couleur attribuée à l'hôte actif.

10. Clavier selon la revendication 8 ou 9, dans lequel l'interface est l'une des suivantes: (a) Série; b) PS/2; et c) Interface USB.

11. Clavier selon l'une des revendications 8 à 10, dans lequel l'éclairage de la pluralité de touches de clavier standard (11) est réalisé en utilisant des LED RVB.

12. Clavier selon l'une des revendications 8 à 11, dans lequel le contrôleur reçoit des messages via l'interface en provenance du commutateur KVM en cas de commutation d'hôte actif, lesdits messages comprennent des informations de couleur.

13. Clavier selon l'une des revendications 8 à 12, dans lequel ladite pluralité de touches de clavier standard (11) comprennent l'une quelconque ou toute combinaison de (a) touches de lettres latines (a-z), (b) touches de chiffres, (c) touches de ponctuation, (d) touches de symboles, (e) touches de commande, (f) touches de fonction, (g) touches de navigation, (h) touches de pavé numérique, et (i) toutes touches de lettres non latines, et/ou dans lequel ladite pluralité de touches de clavier standard (11) est conforme à la série de normes de clavier ISO/IEC 9995.

14. Procédé permettant d'indiquer un ordinateur hôte actif (250) parmi une pluralité d'ordinateurs hôtes tout en fonctionnant avec un commutateur de dispositifs périphériques (240, 300, 400), le procédé comprenant:
(a) la réception, par un contrôleur KVM du commutateur de dispositifs périphériques (240, 300, 400), d'une couleur attribuée à chacun de la pluralité d'ordinateurs hôtes (250);
(b) la réception, par le contrôleur KVM du commutateur de dispositifs périphériques (240, 300, 400), d'une commande de commutation à partir de l'utilisateur qui indique un ordinateur hôte particulier (250) de la pluralité d'ordinateurs hôtes à coupler au commutateur de dispositifs périphériques (240, 300, 400), dans lequel l'ordinateur hôte particulier est l'ordinateur hôte actif;
(c) le couplage, par le commutateur de dispositifs périphériques (240, 300, 400), de l'ordinateur hôte actif (250) à au moins un ensemble de dispositifs périphériques (100, 220, 230); et
(d) l'envoi, par le contrôleur de commutateur KVM, d'une instruction comprenant, pour un indication polychromatique, la couleur à allumer pour allumer ainsi une ou plusieurs sources lumineuses polychromatiques situées dans au moins un dispositif périphérique de l'ensemble de dispositifs périphériques pour indiquer l'ordinateur hôte actif, dans lequel l'éclairage est de la couleur attribuée à l'ordinateur hôte actif.

15. Procédé selon la revendication 14, dans lequel
- le ou les ensembles de dispositifs périphériques comprennent un clavier avec des sources lumineuses polychromatiques, et dans lequel l'étape (d) est effectuée en allumant les sources lumineuses polychromatiques du clavier, et/ou
- à l'étape (c), un dispositif périphérique sélectionné est couplé à un ordinateur hôte sélectionné qui est différent de l'ordinateur hôte couplé à tous les autres dispositifs périphériques dans le ou les ensembles de dispositifs périphériques, et dans lequel à l'étape (d) ledit dispositif périphérique sélectionné est indiqué en éclairant le dispositif périphérique sélectionné à l'aide de la couleur attribuée à l'ordinateur hôte sélectionné, et/ou
- les sources de lumière polychromatique sont des LED RVB, et/ou
- le commutateur de dispositifs périphériques est un commutateur de dispositifs périphériques sécurisé.

16. Un commutateur clavier, vidéo, souris (KVM) (240, 300, 400) permettant d'indiquer, via un ensemble de dispositifs périphériques, un ordinateur hôte actif (250) d'une pluralité d'ordinateurs hôtes tout en fonctionnant avec ledit commutateur KVM, ledit commutateur KVM (240, 300, 400) comprenant:
un circuit d'interface de dispositifs périphériques (360), et
un contrôleur de commutateur KVM (350),
**caractérisé en ce que**
ledit contrôleur de commutateur KVM (350) est configuré pour envoyer une commande pour définir une indication polychromatique de l'ordinateur hôte actif (250) à l'une quelconque ou à toute combinaison d'un ensemble de dispositifs périphériques (100, 220, 230) via le circuit d'interface de dispositifs périphériques (360), dans lequel ladite indication polychromatique indique une couleur attribuée à un hôte couplé au commutateur KVM.
